(19) Europäisches Patentamt
European Patent Office
Office européen des brevets

(11) **EP 2 026 488 A1**

(12) **EUROPEAN PATENT APPLICATION**

(43) Date of publication:
**18.02.2009 Bulletin 2009/08**

(51) Int Cl.:
***H04L 1/00*** (2006.01)

(21) Application number: **07016001.5**

(22) Date of filing: **14.08.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Panasonic Corporation**
**Kadoma-shi**
**Osaka 571-8501 (JP)**

(72) Inventor: **von Elbwart, Alexander Golitschek Edler**
**63225 Langen (DE)**

(74) Representative: **Grünecker, Kinkeldey,**
**Stockmair & Schwanhäusser**
**Anwaltssozietät**
**Leopoldstrasse 4**
**80802 München (DE)**

(54) **Contiguous CQI report**

(57) The current invention concerns a method for transmitting channel quality information in a communication system. The method comprises the steps of choosing a first resource block group out of a plurality of resource block groups. Reporting channel quality information for the first resource block group and reporting channel quality information for at least one second resource block group around the first resource block group within the plurality of resource block groups or reporting a number of resource block groups around the first resource block group within the plurality of resource block groups that are within the same channel quality information category as the first resource block group.

Fig. 6

## Description

### Field of the Invention

This invention is applicable in the field of communication between a transmitter and a receiver. It is particularly related to communication systems where a receiver sends feedback information to the transmitter, where the feedback contains information about the communication channel condition experienced by the receiver.

### Technical Background

Channel Quality Information (CQI) transmission

In a multi-user centrally managed system, a scheduler assigns transmission resources to several users. Since generally the channel conditions for one or different users will vary over at least time and frequency, some sort of channel state or channel quality information is required at the scheduler, preferably transmitted from each user equipment device to the scheduler entity.

For most multi-user scheduler algorithms (except Round Robin), the most accurate channel state information should be for the strongest resource blocks, to optimally assign a resource to a user where the channel exhibits a good quality. This will further be used in case that for transmission of data, the modulation or coding scheme is adapted to the channel quality, to increase the spectral efficiency.

Generally the CQI is transmitted from a transmitting entity to a receiver entity. In the context of 3G (Third Generation) radio network as in UMTS (Universal Mobile Telecommunications System), where a NodeB may act as the multi-user management entity, the CQI for the downlink transmission chain is obtained (estimated) by a user equipment (UE), which subsequently transmits CQI to a NodeB. Therefore with respect to CQI transmission the user equipment acts as the transmitter entity, and the NodeB as the receiver entity.

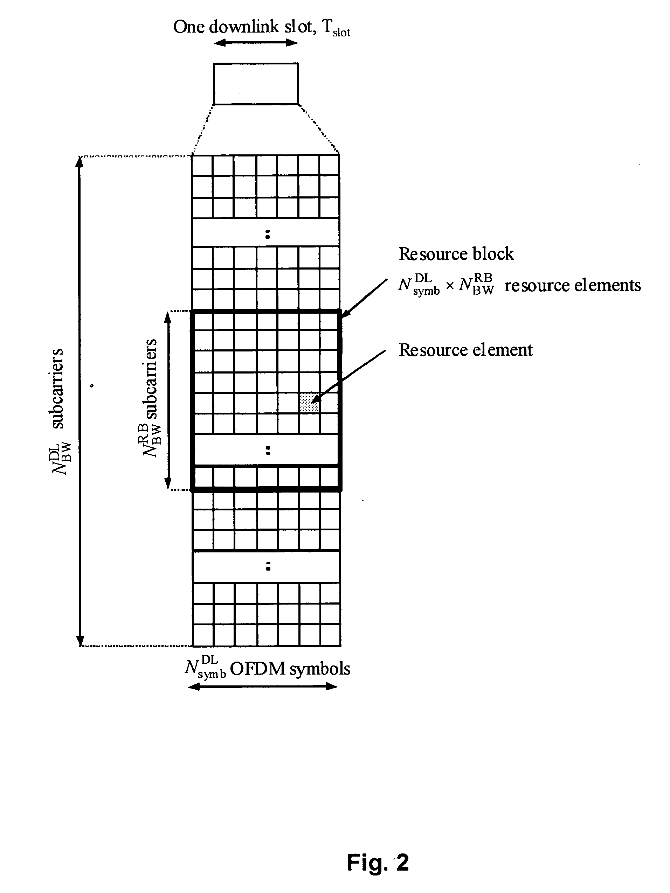

A channel resource may be defined as a "resource block" as in Figure 2 assuming a multi-carrier communication system, e.g. employing OFDM, as for example discussed in the "Long Term Evolution" work item of 3GPP. Assuming that the smallest unit that can be assigned or adapted according to the above, in the ideal case CQI for all resource blocks for all users should be always available. However due to constrained capacity of the feedback channel this is most likely not feasible. Therefore reduction techniques are required, so as to transmit for example CQI information only for a subset of resource blocks for a given user. One possibility is to report only the strongest resource blocks.

When talking herein about "strong" or "high" CQI, those skilled in the art will understand that this refers to a channel quality information that will allow the usage of the channel with a high spectral efficiency, or other metrics that characterise an efficient usage of the channel resource.

Further details about several feedback schemes are given in the following subsections and in 3 GPP TSG-RAN WG1 Meeting #46bis (TDoc R1-062808, 09-13 October in Seoul, Korea).

Full Feedback

In case a full feedback is transmitted, for each of the $N_{rbg}$ resource blocks a CQI value is transmitted, giving the highest accuracy of information at a very high cost of required transmission bits.

Best M

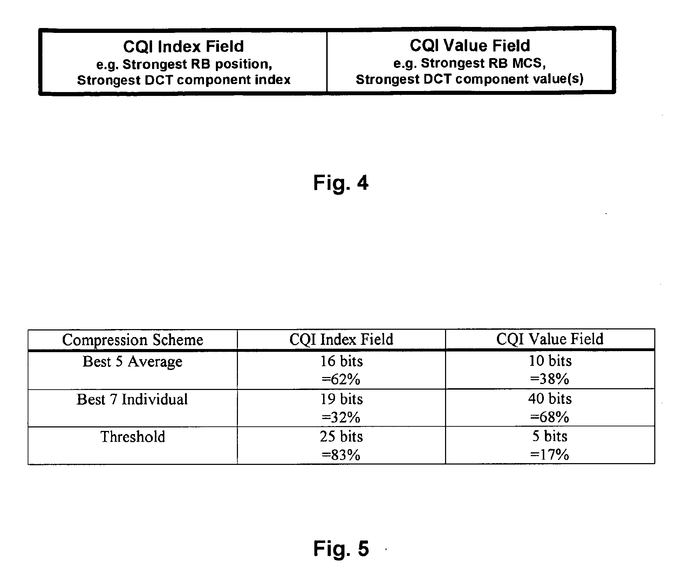

Best M Individual reports power or MCS for M best resource blocks, and average power or MCS for other resource blocks (e.g. R1-061819 Huawei). Assuming that M is known to the scheduler as well as the user equipment, signalling is required for the indices as well as for the values (see Figure 4).

Best M Average reports average power or MCS for M best resource blocks, and average power or MCS for other resource blocks. Assuming that M is known to the scheduler as well as the user equipment, only signalling is required for the indices as well as for the average values.

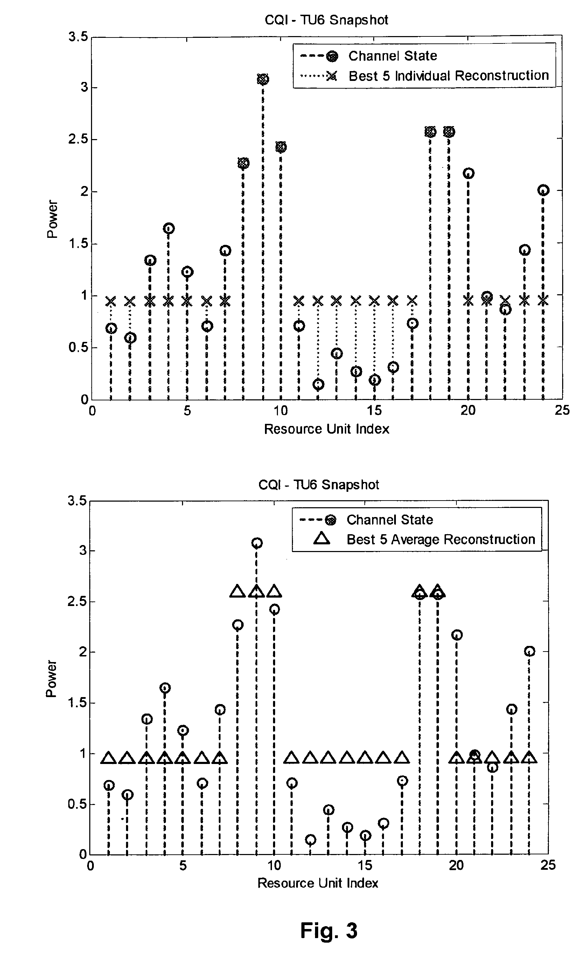

An example of a channel snapshot and an exemplary reconstruction of the channel power using Best 5 Individual and Best 5 Average are given in Figure 3. As can be seen, the Best 5 Individual manages to give exact information for the 5 strongest resource blocks (number 8, 9, 10, 18, 19), but quite substantial deviations from the correct value for all other resource blocks. The Best 5 Average gives by chance quite accurate information for resource blocks 18 and 19, while we can identify larger deviations - both better and worse - from the correct value for resource blocks 8, 9, and 10. Likewise, for all other resource blocks the reconstructed value may exhibit large differences from the correct values.

Average CQI

For all resource blocks, the average CQI value is obtained and transmitted. This may be interpreted as a special case of a Best $M=N_{rgb}$ Average or Best $M=0$ Average scheme. It requires the least amount of transmitted information, however it also offers a generally very low accuracy with respect to the reconstructed resource block-wise channel quality information.

Differential Value Feedback

The general principle is to transmit one CQI value e.g. for one resource block, as an absolute value, and take this value as a reference for CQI values for other resource blocks. Assuming that the difference between other CQI values and the reference CQI value is substantially smaller than the absolute CQI values, fewer bits may be sufficient to quantise that difference than would be required for an absolute value. For example, if absolute values range between 0 and 31 dB, and the quantisation step size should be 1 dB, then 32 values = 5 bit are necessary for an absolute CQI value to cover the whole range. In case the difference between adjacent CQI values is between -3 and +4 dB, with a step size of 1 dB only 8 values = 3 bit are necessary for such a differential CQI value. Likewise, if there exist 32 MCS levels, 5 bits are necessary for such an absolute CQI value; in case the difference in MCS levels is between -3 and +4, 3 bit are required for a differential CQI MCS report.

For the LTE (Long Term Evolution) context, the differential value feedback concept is particularly attractive if there is a high correlation of CQI values in time, frequency, or spatial domain. In 3 GPP TSG-RAN WG1 Meeting #47bis (TDoc R1-070362, 15th - 19th January, 2007 in Sorrento, Italy) contains more details and studies of differential value feedback schemes for LTE can be found.

Threshold CQI

As can be seen from in 3 GPP TSG-RAN WG1 Meeting #46bis (TDoc R1-062808, 09-13 October in Seoul, Korea) there exist many compression schemes that require transmission not only of CQI values but also of corresponding CQI indices.

An additional scheme, the "threshold scheme" proposed by Nokia in 3 GPP TSG-RAN WG1#47bis (TDoc R1-070397 (R1-063384) Sorrento, Ital, January 15th -19th, 2007) requires the transmission of a RB bitmap as an index field, together with a single CQI value that denotes the strongest CQI value within the RBs signalled by the index field.

Downlink Transmission LTE

In LTE OFDM downlink, where the UE acts as the data receiver and the NodeB acts as the data transmitter, data may be transmitted in "localised" or "distributed" mode:

- Localised Mode: Adjacent subcarriers are assigned for transmission to a single UE ("Resource Block");

- Distributed Mode: Subcarriers carrying data for the same UE are distributed across the frequency band.

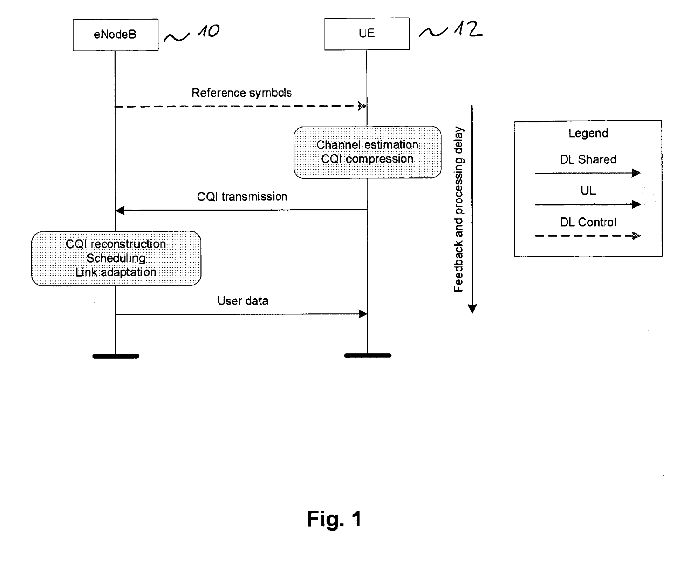

For LTE localised mode in downlink, accurate resource block-dependent channel quality information ("CQI") has to be signalled from UE to eNodeB - see Figure 1. Resource Blocks (RBs) are chosen (="scheduled") when they exhibit e.g. good SINR (= good CQI). The CQI also determines adaptive modulation and coding parameters, resulting in increased spectral efficiency.

Signalling

Obviously, there is a need for using information symbols to convey the CQI from the transmitter to the receiver. Without loss of generality, we can assume that bits can be used as information symbols. Using the notations defined in subsequent sections, we can calculate the number of bits required for such signalling in Table 1. It may be noted that the logarithmic part is pertaining to the size of the index field.

Table 1 - Required signaling bits for CQI Feedback

| CQI Scheme | Number of required bits |
|---|---|
| Full Feedback | $D \cdot N_{rbg}$ |

(continued)

| CQI Scheme | Number of required bits |
|---|---|
| Average | $D$ |
| Best M Individual | $D \cdot (M+1) + \left\lceil ld \binom{N_{rbg}}{M} \right\rceil$ |
| Best M Average | $2 \cdot D + \left\lceil ld \binom{N_{rbg}}{M} \right\rceil$ |
| Threshold | $D + \left\lceil ld \left( N_{rbg} \right) \right\rceil$ |

The introduced prior art CQI compression schemes exhibit the following problems that are to be solved.

Full Feedback

As can be calculated from Table 1, the full feedback scheme requires a very high number of bits to signal the CQI. This requirement may be too high to fulfill in a transmission system, particularly in cellular mobile radio systems where a large number of entities have to report CQI values.

Best M

In the Best M Individual scheme, very detailed information is transmitted for the strongest M resource units. For all other resource units, the information available at the scheduler is extremely rudimentary. Particularly in case that M is rather small, a problem occurs if a user is assigned more resource units than M; in such a case, some allocated resources are only allocated according to an average resource unit quality, which certainly is suboptimal. Furthermore, a subsequent link adaptation would also be based on such an average value, resulting in suboptimal link adaptation and consequently in reduced spectral efficiency. This problem may be circumvented by a high number M, however with the drawback that a lot of feedback signalling is required in this case. Therefore a problem to be solved is to achieve a small amount of feedback signalling.

In the Best M Average scheme, the problems are two-fold. On the one hand, a small number of M will result in similar problems as a small M in the Best M Individual scheme.

Additionally, the accuracy of the best M resource blocks reported is not as high as in the Best M Individual scheme, further deteriorating the accuracy of scheduling or link adaptation performance.

On the other hand, a simple increase of M is not guaranteed to improve the behaviour of the Best M Average scheme; even though the number of resource units which are contained within the signalled set, the averaging over those M resources will decrease the accuracy for those resource units.

Therefore there is an optimum M for which the number and level of detail provide the most accurate allocation or link adaptation. Finding this value of M may not be trivial in a mobile or cellular environment, and in addition even after finding this M value the achievable data transmission throughput in data transmission is generally bad because of the averaging feature of this scheme.

Average

It should be obvious to those skilled in the art that the information conveyed by the average scheme is of very low accuracy. In order to perform meaningful resource scheduling or link adaptation using CQI-dependant modulation or coding schemes, a higher accuracy than that provided by the average scheme has to be available.

Threshold

While threshold-based reporting as outlined above can save on the overhead required for the CQI value transmission, it is rather inefficient with respect to the overhead required for the CQI index field, as it requires a bitmap with one bit for each Resource Block Group (RBG). Additionally, the report contains only a single Signal-to-Noise Ratio (SNR) value for a limited number of RBGs. Consequently, if the scheduler happens to assign an RBG for which no CQI data is available, spectral efficiency is lost.

**Summary of the Invention**

In view of the problems as stated above, one object of the invention to achieve good frequency selective MCS reporting with small overhead cost.

Another object of the invention is to report more than an average MCS level for strong RBGs.

A further object of the invention is to reduce the amount of index signaling.

At least one of these objects is solved by the subject matter of the independent claims. Advantageous embodiments of the invention are subject matters of the dependent claims.

The invention concerns a method, a transmission apparatus, a communication system and a computer-readable medium for transmitting channel quality information in a communication system. A first resource block group is chosen out of a plurality of resource block groups and the channel quality information for the first resource block group is reported. Channel quality information is reported for at least one second resource block group around the first resource block group within the plurality of resource block groups or a number of resource block groups around the first resource block group within said plurality of resource block groups that are within same channel information category as the first resource block group are reported.

According to one aspect of the invention, the step of choosing the first resource block group comprises choosing a resource block group with a best signal properties.

In a further aspect of the invention the step of choosing the first resource block group comprises choosing a resource block group within a subset of the plurality of resource block groups with a best average signal properties.

In one embodiment of the invention, the step of choosing the first resource block group comprises choosing a resource block group within the subset of the resource block groups with the largest coherence.

According to one exemplary embodiment of the invention, the channel quality information comprises one of or a combination of any of the following: Modulation and coding scheme indicator, transport block size indicator, information block size indicator, code block size indicator, signal to noise ratio, signal to interference ratio, channel coefficient, channel gain, channel attenuation, modulation scheme indicator and coding scheme indicator. The channel quality information may further comprise elements related to multi-antenna transmission, such as a precoding indicator, or a transmission rank indicator.

Another embodiment of the invention relates to the reporting of channel quality information for at least one second resource block group comprises reporting a highest supportable modulation and coding scheme for the second resource block group around the first resource block group.

According to another embodiment of the invention, the step of reporting channel quality information for at least one second resource block group comprising reporting a number of its neighbouring resource block groups that support a given modulation and coding scheme.

In another embodiment of the invention the number of the reported resource block groups is configured by a user equipment or is configured by a base station.

In another advantageous embodiment of the invention a multitude of channel quality information reports is generated for an increasing number of neighbouring resource block groups.

In a further advantageous embodiment of the invention the channel quality information category comprises one of or a combination of any of: modulation and coding scheme level transport, transport block size, information block size, code block size, signal to noise ratio range, signal to interference ratio range, channel coefficient range, channel gain range and channel attenuation range.

According to a further advantageous embodiment of the invention, the step of reporting channel quality information for at least one second resource block group around the first resource block group within the plurality of resource block groups comprises reporting the channel information for at least the second resource block group by using a differential to a previous resource block group channel information.

It is an advantage that the steps of reporting channel quality information for at least one second resource block group around the first resource block group within the plurality of resource block groups or reporting a number of resource block groups around the first resource block group within the plurality of resource block groups that are within the same channel quality information category as the first resource block group are repeated to generate multiple reports that are transmitted in a same message or in another message.

**Brief Description of the Figures**

In the following, the invention is described in more detail and referenced to the attached figures and drawings.

Similar or corresponding details in the figures are marked with the same reference numerals.

Fig. 1 shows an exemplary signal flow in a communication system between an eNode B and a UE;

Fig. 2 is a visualization of terms and symbols used;

Fig. 3 shows a sample channel quality snapshot as power against resource unit index with best M reconstruction;

Fig. 4 is a visualization of index field and value field;

Fig. 5 shows exemplary sizes of an index field and a value field for exemplary compression schemes for 25 RBGs;

Fig. 6 shows an embodiment of the invention;

Fig. 7 shows another embodiment of the invention;

Fig. 8 shows a further embodiment of the invention; and

Fig. 9 shows another embodiment of the invention.

**Detailed Description of the Invention**

Generally it should be further noted that the term "compression" as used herein refers to a channel quality information provision scheme, where the total channel quality information feedback overhead is reduced compared to the "Full Feedback" case described in the Technological Background section.

Further, it should be noted that the term "resource unit" or equivalently "resource block group" (RBG) as used herein refers to one of a plurality of resource units of a channel for which a channel quality measure is obtained. Channel quality reporting may thus be performed on a per-resource unit basis. Moreover, this resource unit may or may not be equal to a resource block denoting the smallest amount of resources of a channel that can be allocated to a user (e.g. by scheduling). For example in an OFDMA system, a resource unit could refer to a resource of one subframe in the time domain and a subband in the frequency domain, while a resource block denotes a subframe in the time domain and a subcarrier (of one of the subbands) in the frequency domain.

In another embodiment of the invention, a resource unit refers to a range of time or frequencies (subcarriers) - in time or frequency domain - over which the channel state is substantially flat, e.g. a coherence time or coherence bandwidth, which may or may not be a multiple of the respective smallest amount of resources in the communication system (e.g. resource block, subframe, TTI).

In the invention CQI (e.g. MCS) values are reported for a certain RBG (preferably the strongest RBG or an RBG within a strong RBG area) and for a number of adjacent RBGs. Only the said certain RBG is signalled explicitly by means of the CQI index field. Channel coherence is exploited by reporting CQI of adjacent RBGs of said certain RBG.

In the following the term adjacent is used for RBGs around the chosen RBG. These RBGs are then neighbouring RBGs.

In order to report channel quality in a feedback report from a data receiver to a data transmitter, the channel condition is measured and compressed to reduce the amount of required data for the report. The compression is achieved by reporting merely a pointer to a certain resource index, the quality of the channel of said resource, and the quality of the channel of adjacent resources.

In the current invention, the strongest resource block index is signaled, and the highest CQI (e.g. MCS) that can reach a target block error rate according to the user equipment's performance is reported. Additional information for the adjacent radio blocks is reported.

In a first embodiment of the invention, the highest supportable MCS is reported for resource blocks adjacent to the strongest resource block and in another embodiment of the invention, the number of adjacent resource blocks that support a given MCS is reported. This is explained in more detail in the following.

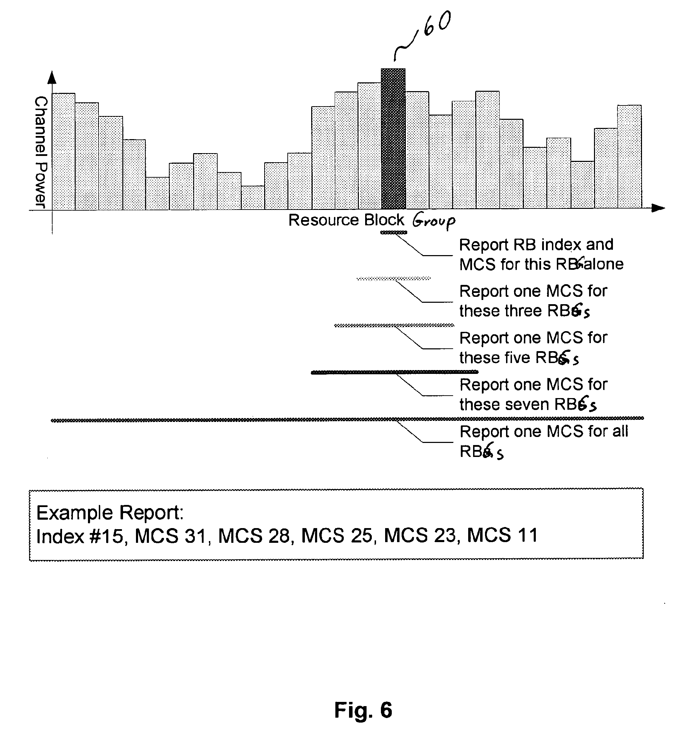

Figure 6 illustrates that the report is transmitted for the strongest resource block group index and modulation and coding scheme for this strongest resource block group. The modulation and coding scheme for the two adjacent resource block groups as well as the strongest resource block group are reported, one MCS for five resource block groups is reported, one MCS for seven resource block groups is reported and a report is transmitted for one MCS for all resource block groups. This then gives the size of the report of 5 bits for the index + 5 x 5 bits MCS values.

In this embodiment shown in Fig. 6 bits may be saved by using differential MCSs against "previous" MCS. For example, the MCS for three resource blocks against the MCS for one resource block, the MCS for five resource blocks against the MCS for three resource blocks, etc., may be obtained to have a smaller range of values that need to be transmitted.

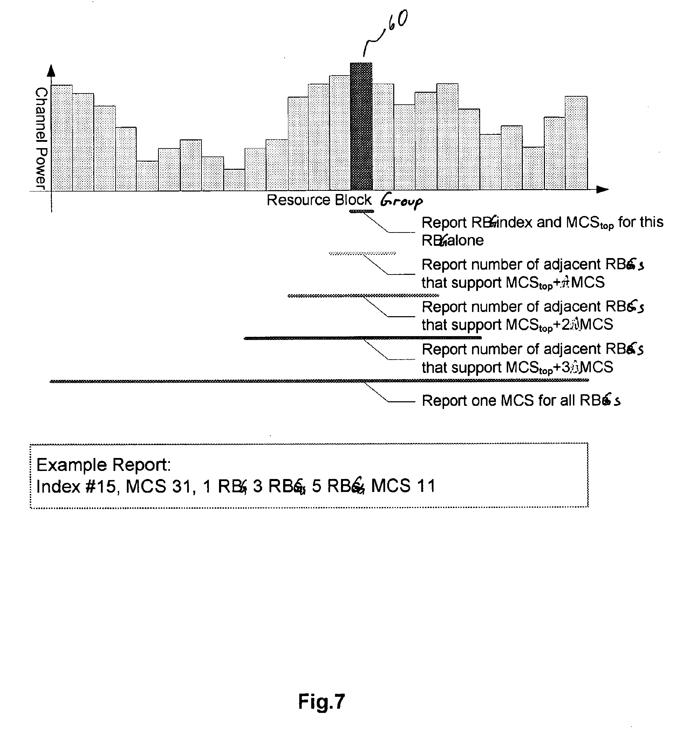

In Fig. 7 another embodiment of the invention is illustrated. Here, the strongest resource block is reported, the MCS for this strongest resource block group (MCS$_{top}$) and all twenty-five resources block groups. The number of adjacent resource block groups that support MCS$_{top}$ plus 1, 2, 3 $\Delta$ MCS are reported. In this case, the size of the report is the 5 bit index + 2 x 5 MCS values + 3 x 4 bit number of adjacent resource block groups. Again, bits may be saved by using differential adjacent resource blocks against previous adjacent resource blocks. This means that the number of adjacent resource block groups for two $\Delta$ MCS against one $\Delta$ MCS, the adjacent resource block groups for three $\Delta$ MCS against two $\Delta$ MCS, etc., are transmitted.

Channel Quality Measure

The channel quality feedback measure may be represented by each or combinations of the following:

- Modulation and coding scheme ("MCS") indicator;

- (Transport / Information / Code) block size indicator;

- Signal-to-Noise ratio;

- Signal-to-Interference ratio;

- Channel coefficient;

- Channel gain or attenuation;

- Modulation scheme indicator; and

- Coding scheme indicator.

It should be obvious to those skilled in the art that the expression that is used widely in the detailed description about "strongest resource units" etc. is referring to a modulation and coding scheme, a Signal-to-Noise ratio or a Signal-to-Interference ratio, or generally any measure that relates to a signal strength or that can be derived therefrom. However the interpretation for other measure mentioned above can be adapted mutatis mutandis. For example, a strong Signal-to-Interference ratio may also be expressed as a modulation scheme indicator that indicates a high-order modulation scheme (e.g. 16-QAM, 64-QAM, etc.), or as a coding scheme indicator that indicates a weak coding scheme (e.g. by a high coding rate), or as a transport block size indicator that indicates a large number of bits that can be conveyed. Those skilled in the art will readily be able to derive the corresponding interpretations for other measures or combinations of any measures.

A channel quality measure may be determined over each or a combination of the following dimensions:

- Time unit (e.g. timeslot, resource block, radio frame, sub-frame, transmission time interval, millisecond, etc.);

- Frequency unit (e.g. transmission bandwidth, carrier bandwidth, sub-band, resource block, etc.);

- Antenna unit (e.g. transmit antenna, receive antenna, antenna array unit, MIMO channel, etc.);

- Code unit (e.g. spreading code number or ID); and

- Polarisation angle (e.g. horizontal, vertical, circular, etc.).

The following examples from state-of-the-art transmission technologies should provide additional understanding to those skilled in the art on how to beneficially employ the invention.

FDM(A) transmission

In an FDM(A) (Frequency Division Multiplex) transmission scheme, $N_{rbg}$ data resources are available in the frequency domain. Therefore also the channel quality measure may be obtained as a frequency-domain variable of $N_{rbg}$

values.

It may be noted that this approach may also be used in the special case of OFDM(A), as it can be seen as a special instance of an FDM(A) transmission.

In a multi-antenna transmission scheme, the channel quality value may vary from one antenna to the other. Those skilled in the art will recognise that this is valid both for transmit and receive antennas. In particular with respect to MIMO technologies, the communication system will generally consist of $N_{MIMO}$ MIMO data streams, for each of which a plurality of channel quality measures may be obtained if for example each stream uses an FDM transmission scheme. In such a case, it is possible to employ the proposed scheme to each of the MIMO data streams.

Alternatively, only a single index field is used to point at a certain RBG for which a CQI value is reported for each MIMO data stream. Said index may be obtained according to what is outlined for identifying the index for the FDM case, mutatis mutandis for the multi-stream domain instead of the frequency domain.

Edge behavior

It should be noted that it can occur that the edge of the resources would be transcended when reporting about adjacent RBGs. For example, if the total number of RBGs is 25 (assuming that the index runs from 1 to 25), and the RBG to be explicitly reported is at index number 23, then as soon as more than 2 adjacent RBGs are taken into account for supportable MCS the issue of edge behaviour is faced.

In one embodiment, as soon as an edge is encountered, only RBGs up to the edge are considered (usually this is a one-sided problem). Consequently, if in the example three adjacent RBGs are to be used for determining MCS, RBG indices 20-25 are used (26 is ignored, since it does not exist).

In another embodiment, the RBG indices are wrapped around the edge. In the example, if three adjacent RBGs are to be used, RBG indices 20-25 and 1 are used.

The current scheme may also be employed to report for example MIMO parameters, such as a precoding vector index.

When reporting CQI for adjacent RBGs, the assumption has been that the CQI is reported for all RBGs comprised in the adjacency regions. In other words, if the explicitly signalled RBG is index number 20, and one adjacent RBG should be reported, then the CQI for indices 19-21 is reported.

In an alternative embodiment, only the CQI for indices 19 & 21 is reported. Generally, in this alternative embodiment, CQI is reported only for those adjacent RBGs that are not encompassed by CQI with fewer adjacent RBGs. In this way, if the CQI report should contain 1, 2, and 3 adjacent RBGs, the CQI value is reported (according to the example) for RBGs 20, 19&21, 18&22, and 17&23.

For a more diversified report, the index could point to more than one RBG, each of which serves individually as the basis for respective adjacent RBG reporting.

Multiple search reports can be used to allow more frequency diverse reports (multi-island). These multi-island reports can be transmitted in the same message or in alternate messages. The MCS for all resource blocks is not necessarily part of the report, as it could be provided by PUCCH CQI reports, which is not described any further in this application.

In one embodiment of the invention, the value of ΔRBG may be part of the CQI or other feedback if it is determined by the user equipment, or may be configured by the eNode B.

In another embodiment of the invention the value of ΔMCS may be part of the CQI or other feedback if determined by the user equipment, or may be configured by the eNode B.

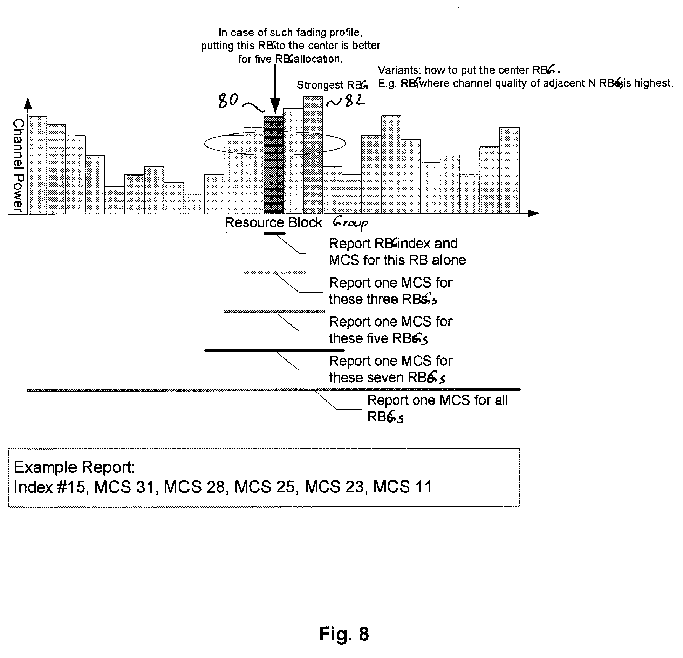

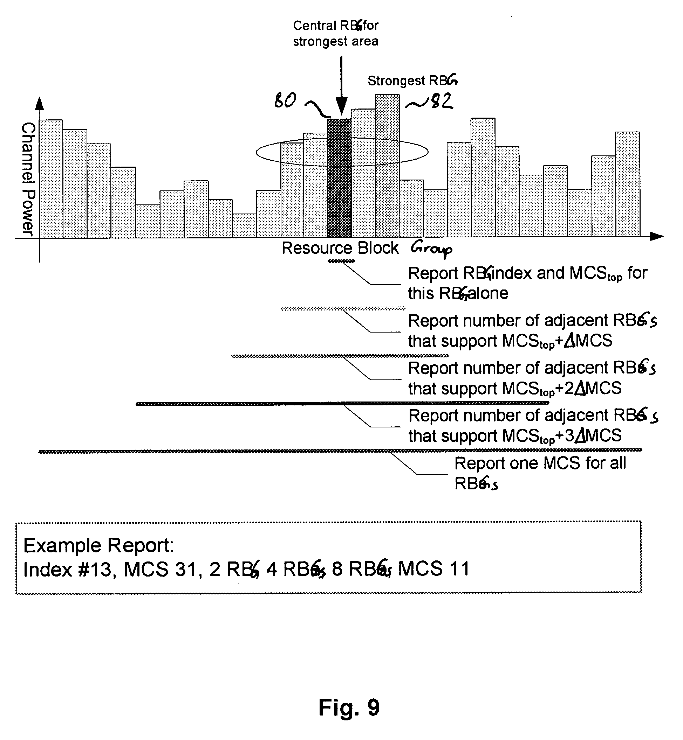

The signaled resource block does not necessarily have to be the strongest, it could also be in the strongest area, in an area with the largest coherence etc. This is shown in Figs. 8 and 9, and is particularly relevant in the case of multi-island reports.

One example for the strongest area is shown in Fig. 8 where a report is transmitted for the resource block in the strongest area, with the MCS for this resource block group and the MCS for one adjacent resource block groups on either side, two adjacent resource block groups on either side, three adjacent resource block groups on either side, and all resource block groups. The size of the report is then a 5 bit index + 5 x 5 bit MCS values. In case of such a fading profile putting the indicated resource block group to the center is better for five resource block group allocations, although this center resource block group is not the strongest resource block group. Another way of choosing the center resource block group is choosing the resource block group for which the channel quality of the adjacent N resource block groups is highest.

In Fig. 9 another example is shown where the strongest resource block group has not been chosen as for the central resource block group in the strongest area. The report is sent for the resource block group in the strongest area, the MCS for that resource block group ($MCS_{top}$) and the MCS for all twenty-five resource block groups. The reported number of the adjacent resource block groups that support $MCS_{top}$ plus 1, 2, 3 ΔMCS is sent. The size of the report is the 5 bit index + 2 x 5 bit MCS values + 3 x 4 bit number of the adjacent resource block groups.

The benefits of the invention include that small overhead signaling is required because the index field size is reduced as compared to the individual resource block reporting schemes, for example best M individual. Frequency selective reporting is possible, because not an average MCS is reported only but more accurate MCS for adjacent blocks is given. This is particular benefit for channels with large coherence bandwidth, such as in a pedestrian environment.

Another embodiment of the invention relates to the implementation of the above described various embodiments using hardware and software. It is recognized that the various embodiments of the invention may be implemented or performed using computing devices (processors). Computing devices or processors may for example be general purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the invention may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc.

In the previous paragraphs various embodiments of the invention and variations thereof have been described. It would be appreciated by a person skilled in the art that numerous variations and/or modifications may be made to the present invention as shown in the specific embodiments without departing from the spirit or scope of the invention as broadly described.

It should be further noted that most of the embodiments have been outlined in relation to a 3GPP-based communication system and the terminology used in the previous sections mainly relates to the 3GPP terminology. However, the terminology and the description of the various embodiments with respect to 3GPP-based architectures is not intended to limit the principles and ideas of the inventions to such systems.

Also the detailed explanations given in the Technical Background section above are intended to understand the mostly 3GPP specific exemplary embodiments described herein better and should not be understood as limiting the invention to the described specific implementations of processes and functions in the mobile communication network. Nevertheless, the improvements proposed herein may be readily applied in the architectures described in the Technological Background section. Furthermore the concept of the invention may be also readily used in the LTE RAN currently discussed by the 3GPP.

**List of acronyms and symbols used**

D          Number of bits used for transmission of a single coefficient, SINR value, MCS level, transport block size, etc.

LTE       Long Term Evolution

MCS      Modulation and Coding Scheme

$N_{rbg}$      Total number of resource block groups

RBG      Resource Block Group

$$\binom{n}{k} = \frac{n!}{k!\,(n-k)!}$$

$\lceil x \rceil$      Smallest integer number that is equal to or greater than x

**Claims**

1. A method for transmitting channel quality information in a communication system, the method comprising the steps of:

     a) choosing a first resource block group out of a plurality of resource block groups;
     b) reporting channel quality information for the first resource block group; and

c) reporting channel quality information for at least one second resource block group around the first resource block group within said plurality of resource block groups; or

d) reporting a number of resource block groups around the first resource block group within said plurality of resource block groups that are within the same channel quality information category as the first resource block group.

2.  The method of claim 1, wherein the step of choosing the first resource block group comprises:

    choosing a resource block group with the best signal properties.

3.  The method of claim 1, wherein the step of choosing the first resource block group comprises:

    choosing a resource block group within a subset of said plurality of resource block groups with the best average signal properties.

4.  The method of claim 1, wherein the step of choosing the first resource block group comprises:

    choosing a resource block group within a subset of said resource block groups with the largest coherence.

5.  The method according to any of claims 1 to 4, wherein the channel quality information comprises one of or a combination of any of:

    modulation and coding scheme indicator, transport block size indicator, information block size indicator, code block size indicator, signal-to-noise ratio, signal-to-interference ratio, channel coefficient, channel gain, channel attenuation, modulation scheme indicator and coding scheme indicator.

6.  The method according to any of claims 1 to 5, wherein step c) comprises
    reporting a highest supportable modulation and coding scheme for the second resource block group around the first resource block group.

7.  The method according to any of claims 1 to 5, wherein step d) comprises
    reporting a number of neighbouring resource block groups that support a given modulation and coding scheme.

8.  The method according to any of claims 1 to 7, wherein the number of the reported resource block groups is configured by a user equipment or is configured by a base station.

9.  The method according to any of claims 1 to 8, wherein a multitude of channel quality information reports is generated for an increasing number of neighbouring resource block groups.

10. The method according to any of claims 1 to 9, wherein the channel quality information category comprises one of or a combination of any of:

    modulation and coding scheme level, transport block size, information block size, code block size, signal-to-noise ratio range, signal-to-interference ratio range, channel coefficient range, channel gain range, channel attenuation range, modulation and coding scheme level.

11. The method according to any of claims 1 to 10, wherein step c) or d) further comprises:

    reporting the channel information for at least the second resource block group by using a differential to a previous resource block group.

12. The method according to any of claims 1 to 11, wherein steps c) or d) are repeated to generate multiple reports that are transmitted in a same message or in another message.

13. The method according to any of claims 1 to 12, wherein the second resource block group of step c) and the number of resource block groups of step d) also comprise the first resource block group.

14. A transmitting apparatus for transmitting channel quality information in a communication system, the transmitting apparatus comprising:

choosing means adapted to choose a first resource block group out of a plurality of resource block groups;
transmitting means adapted to report channel quality information for the first resource block group;
the transmitting means further being adapted to report channel quality information for at least one second resource block group around the first resource block group within said plurality of resource block groups or report a number of resource block groups around the first resource block group within said plurality of resource block groups that are within the same channel quality information category as the first resource block group.

15. The transmitting apparatus of claim 14, wherein the transmitting apparatus is further adapted to carry out the steps of the method according to any of claims 2 to 13.

16. A communication system comprising a receiving apparatus and a transmitting apparatus for transmitting channel quality information, wherein the transmitting apparatus comprises:

choosing means adapted to choose a first resource block group out of a plurality of resource block groups;
transmitting means adapted to report channel quality information for the first resource block group;
the transmitting means further being adapted to report channel quality information for at least one second resource block group around the first resource block group within said plurality of resource block groups or report a number of resource block groups around the first resource block group within said plurality of resource block groups that are within the same channel quality information category as the first resource block group.

17. The communications system according to claim 16 adapted to carry out the method steps according to any of claims 2 to 13.

18. A computer-readable medium storing instructions that, when executed by a processor of a transmitting apparatus, cause the transmitting apparatus to transmit channel quality information, by:

a) choosing a first resource block group out of a plurality of resource block groups;
b) reporting channel quality information for the first resource block group; and
c) reporting channel quality information for at least one second resource block group around the first resource block group within said plurality of resource block groups; or
d) reporting a number of resource block groups around the first resource block group within said plurality of resource block groups that are within the same channel quality information category as the first resource block group.

19. The computer-readable medium storing instructions that, when executed by a processor of a transmitting apparatus, cause the transmitting apparatus to perform the steps of the method according to any of claims 2 to 13.

Fig. 1

One downlink slot, $T_{slot}$

Resource block

$N_{symb}^{DL} \times N_{BW}^{RB}$ resource elements

Resource element

$N_{BW}^{DL}$ subcarriers

$N_{BW}^{RB}$ subcarriers

$N_{symb}^{DL}$ OFDM symbols

**Fig. 2**

Fig. 3

| CQI Index Field<br>e.g. Strongest RB position,<br>Strongest DCT component index | CQI Value Field<br>e.g. Strongest RB MCS,<br>Strongest DCT component value(s) |
| --- | --- |

**Fig. 4**

| Compression Scheme | CQI Index Field | CQI Value Field |
| --- | --- | --- |
| Best 5 Average | 16 bits<br>=62% | 10 bits<br>=38% |
| Best 7 Individual | 19 bits<br>=32% | 40 bits<br>=68% |
| Threshold | 25 bits<br>=83% | 5 bits<br>=17% |

**Fig. 5**

~ 60

Channel Power

Resource Block Group

Report RB index and
MCS for this RB alone

Report one MCS for
these three RBGs

Report one MCS for
these five RBGs

Report one MCS for
these seven RBGs

Report one MCS for all
RBGs

Example Report:
Index #15, MCS 31, MCS 28, MCS 25, MCS 23, MCS 11

**Fig. 6**

Channel Power

Resource Block *Group*

Report RB index and MCS$_{top}$ for this RB alone

Report number of adjacent RBs that support MCS$_{top}$+MCS

Report number of adjacent RBs that support MCS$_{top}$+2MCS

Report number of adjacent RBs that support MCS$_{top}$+3MCS

Report one MCS for all RBs

Example Report:
Index #15, MCS 31, 1 RB, 3 RBs, 5 RBs, MCS 11

**Fig.7**

In case of such fading profile,
putting this RB to the center is better
for five RB allocation.

Variants: how to put the center RB.

Strongest RB.

E.g. RB where channel quality of adjacent N RBs is highest.

*80*

*~82*

Channel Power

Resource Block *Group*

Report RB index and
MCS for this RB alone

Report one MCS for
these three RBs

Report one MCS for
these five RBs

Report one MCS for
these seven RBs

Report one MCS for all
RBs

Example Report:
Index #15, MCS 31, MCS 28, MCS 25, MCS 23, MCS 11

**Fig. 8**

Central RBG for
strongest area

Strongest RBG

80

~82

Channel Power

Resource Block Group

Report RBG index and MCS_top for this RBG alone

Report number of adjacent RBGs that support MCS_top+ΔMCS

Report number of adjacent RBGs that support MCS_top+2ΔMCS

Report number of adjacent RBGs that support MCS_top+3ΔMCS

Report one MCS for all RBGs

Example Report:
Index #13, MCS 31, 2 RBG, 4 RBGs, 8 RBGs, MCS 11

**Fig. 9**

**European Patent Office**

## EUROPEAN SEARCH REPORT

Application Number

EP 07 01 6001

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 750 399 A (MOTOROLA INC [US]) 7 February 2007 (2007-02-07) * column 5, paragraph 21 - column 6, paragraph 22 * * column 7, paragraph 27 - column 8, paragraph 30 * ----- | 1-19 | INV. H04L1/00 |
| X | EP 1 564 953 A (SAMSUNG ELECTRONICS CO LTD [KR]) 17 August 2005 (2005-08-17) * column 2, paragraph 9 * * column 4, paragraph 15 * * column 6, paragraph 21 - column 7, paragraph 29 * * column 9, paragraph 44 * * figure 4 * ----- | 1-19 | |
| X | EP 1 509 016 A (SAMSUNG ELECTRONICS CO LTD [KR]) 23 February 2005 (2005-02-23) * page 5, paragraph 29 - paragraph 31 * * page 7, paragraphs 39,43 * ----- | 1-19 | |
| X | EP 1 533 966 A (SAMSUNG ELECTRONICS CO LTD [KR]) 25 May 2005 (2005-05-25) * page 5, paragraph 27 * * page 7, paragraph 42 - paragraph 43 * ----- | 1-19 | TECHNICAL FIELDS SEARCHED (IPC) H04L |
| X | US 2002/147017 A1 (LI XIAODONG [US] ET AL) 10 October 2002 (2002-10-10) * page 3, paragraph 44 - paragraph 46 * * page 6, paragraph 84 - paragraph 86; figure 5 * * page 6, paragraph 92 - page 7, paragraph 99; figure 7 * ----- | 1-19 | |
| X | US 2007/058676 A1 (LIM CHI-WOO [KR] ET AL) 15 March 2007 (2007-03-15) * page 2, paragraph 29 * ----- -/-- | 1-19 | |

The present search report has been drawn up for all claims

| Place of search | Date of completion of the search | Examiner |
|---|---|---|
| The Hague | 18 January 2008 | Kazaniecki, Daniel |

EPO FORM 1503 03.82 (P04C01)

**European Patent Office**

**EUROPEAN SEARCH REPORT**

Application Number

EP 07 01 6001

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 760 961 A (SAMSUNG ELECTRONICS CO LTD [KR]) 7 March 2007 (2007-03-07) * column 2, paragraph 10 * * column 4, paragraph 18 * ----- | 1-19 | |

TECHNICAL FIELDS SEARCHED (IPC)

The present search report has been drawn up for all claims

| Place of search | Date of completion of the search | Examiner |
|---|---|---|
| The Hague | 18 January 2008 | Kazaniecki, Daniel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 07 01 6001

This annex lists the patent family members relating to the patent documents cited in the above-mentioned European search report.
The members are as contained in the European Patent Office EDP file on
The European Patent Office is in no way liable for these particulars which are merely given for the purpose of information.

18-01-2008

| Patent document cited in search report | | Publication date | Patent family member(s) | | Publication date |
|---|---|---|---|---|---|
| EP 1750399 | A | 07-02-2007 | JP 2007043696 A | | 15-02-2007 |
| | | | US 2007026810 A1 | | 01-02-2007 |
| | | | WO 2007015727 A1 | | 08-02-2007 |
| EP 1564953 | A | 17-08-2005 | CN 1684457 A | | 19-10-2005 |
| | | | KR 20050081528 A | | 19-08-2005 |
| | | | US 2005232156 A1 | | 20-10-2005 |
| EP 1509016 | A | 23-02-2005 | CN 1585394 A | | 23-02-2005 |
| | | | JP 2005073259 A | | 17-03-2005 |
| | | | KR 20050020457 A | | 04-03-2005 |
| | | | US 2007140102 A1 | | 21-06-2007 |
| EP 1533966 | A | 25-05-2005 | CN 1625164 A | | 08-06-2005 |
| | | | JP 2005160079 A | | 16-06-2005 |
| | | | KR 20050048861 A | | 25-05-2005 |
| | | | US 2005128993 A1 | | 16-06-2005 |
| US 2002147017 | A1 | 10-10-2002 | AU 3662702 A | | 24-06-2002 |
| | | | CA 2431844 A1 | | 20-06-2002 |
| | | | CN 1484906 A | | 24-03-2004 |
| | | | CN 1874334 A | | 06-12-2006 |
| | | | EP 1344365 A2 | | 17-09-2003 |
| | | | JP 2005502218 T | | 20-01-2005 |
| | | | MX PA03005308 A | | 02-12-2004 |
| | | | WO 0249305 A2 | | 20-06-2002 |
| | | | US 2006083210 A1 | | 20-04-2006 |
| | | | US 2007054626 A1 | | 08-03-2007 |
| | | | US 2002119781 A1 | | 29-08-2002 |
| | | | US 2003169681 A1 | | 11-09-2003 |
| US 2007058676 | A1 | 15-03-2007 | KR 20070014895 A | | 01-02-2007 |
| EP 1760961 | A | 07-03-2007 | WO 2007064074 A1 | | 07-06-2007 |
| | | | KR 20070027845 A | | 12-03-2007 |
| | | | US 2007098093 A1 | | 03-05-2007 |

EPO FORM P0459

For more details about this annex : see Official Journal of the European Patent Office, No. 12/82